# EUROPEAN PATENT APPLICATION

(11) **EP 4 822 529 A1**
(43) Date of publication of application: **14.10.2026**
(21) Application number: 24906397.5
(22) Date of filing: 18.12.2024
(51) Int. Cl.: G06F 9/50

(54) **SERVICE PROCESSING APPARATUS AND METHOD, AND DEVICE AND STORAGE MEDIUM**

(30) Priority: 22.12.2023 CN 202311795739
(71) Applicant: Huawei Technologies Co., Ltd., Shenzhen, Guangdong 518129 (CN)
(72) Inventor: DI, Qianli, Shenzhen, Guangdong 518129 (CN); SU, Fang, Shenzhen, Guangdong 518129 (CN); WANG, Zonglei, Shenzhen, Guangdong 518129 (CN); XIN, Ling, Shenzhen, Guangdong 518129 (CN); BI, Bo, Shenzhen, Guangdong 518129 (CN); WANG, Chao, Shenzhen, Guangdong 518129 (CN)
(74) Representative: Thun, Clemens
(86) International application number: PCT/CN2024/140283
(87) International publication number: WO 2025/130918

(57) **Abstract**

Embodiments of this application provide a service processing apparatus and method, a device, and a storage medium, and relate to the field of electronic technologies, to reduce a cache miss rate when a plurality of processing cores process services, improve prediction accuracy and an IPC, and further improve service running efficiency. The service processing apparatus includes: a global predictor and a plurality of processing cores coupled to the global predictor, where the global predictor is configured to cache historical running information of at least one of the plurality of processing cores; a first processing core in the plurality of processing cores is configured to obtain first historical running information in the historical running information, and run a first service based on the first historical running information, to obtain first running information. The first processing core is any one of the plurality of processing cores; and the global predictor is further configured to cache the first running information.

## Description

This application claims priority to Chinese Patent Application No. 202311795739.1, filed with the China National Intellectual Property Administration on December 22, 2023 and entitled "SERVICE PROCESSING APPARATUS AND METHOD, DEVICE, AND STORAGE MEDIUM", which is incorporated herein by reference in its entirety.

### TECHNICAL FIELD

This application relates to the field of electronic technologies, and in particular, to a service processing apparatus and method, a device, and a storage medium.

### BACKGROUND

Currently, a central processing unit (central processing unit, CPU) subsystem is usually used to process services. The CPU subsystem includes a plurality of processing cores, which may be configured to perform services such as a benchmark performance test, a service performance test, similar service deployment, or service suite deployment. Instructions and data of the foregoing services are large in scale, and cache resources of the plurality of processing cores in the CPU subsystem are limited. Therefore, the CPU subsystem has a problem of low efficiency when running the foregoing services.

### SUMMARY

This application provides a service processing apparatus and a method, a device, and a storage medium, to improve efficiency of running a service by a plurality of processing cores.

To achieve the foregoing objectives, the following technical solutions are used in embodiments of this application.

According to a first aspect, a service processing apparatus is provided, including: a global predictor and a plurality of processing cores coupled to the global predictor, where the global predictor is configured to cache historical running information of at least one of the plurality of processing cores, where the at least one processing core may be some or all of the plurality of processing cores; a first processing core in the plurality of processing cores is configured to obtain first historical running information in the historical running information, and run a first service based on the first historical running information, to obtain first running information, where the first historical running information may be running information related to the first service, and the first processing core is any one of the plurality of processing cores; and the global predictor is further configured to cache the first running information, that is, the global predictor may dynamically update the historical running information based on the running information obtained by any one of the plurality of processing cores running the service.

In the foregoing technical solution, the global predictor caches the historical running information and caches the running information generated when any one of the plurality of processing cores runs the service, so as to update the cached running information for subsequent use. When running the service, any one of the plurality of processing cores may obtain required running information from the global predictor. In this way, compared with a case in which a larger-capacity cache is expanded for the plurality of processing cores, in this solution, a cache miss rate of the plurality of processing cores during service processing can be reduced, and prediction accuracy and an IPC can be improved, thereby improving service running efficiency.

In a possible implementation of the first aspect, the historical running information includes historical running information of a plurality of services, and the historical running information of the plurality of services includes the first historical running information; and the global predictor includes: a plurality of buffer areas, used to separately cache the historical running information of the plurality of services, where a first buffer area in the plurality of buffer areas is used to cache the first historical running information. For example, historical running information of different services may be cached in different buffer areas. In the foregoing possible implementation, the historical running information of the plurality of services is separately cached in the plurality of buffer areas, so that any one of the plurality of processing cores can be prevented from obtaining historical running information that does not belong to a service of the processing core, and security information leakage caused by overflow of the historical running information in the global predictor can be avoided, thereby improving security of the historical running information in the global predictor.

In a possible implementation of the first aspect, the first processing core is further configured to: obtain configuration information for the first service, where the configuration information indicates the first buffer area (for example, indicates a size of the first buffer area and/or indicates address space corresponding to the first buffer area), and the configuration information may be sent by software running on the plurality of processing cores, or may be preconfigured in the first processing core; and configure the first buffer area for the first service based on the configuration information, where configuring the first buffer area includes enabling, disabling, or clearing the first buffer area, for example, when the first buffer area needs to be used, the first buffer is enabled via the configuration information, and after the first buffer is used, the first buffer area is disabled or cleared via the configuration information. In the foregoing possible implementation, a corresponding buffer area is configured in the global predictor for a specific service of any one of the plurality of processing cores via the configuration information, so that a resource in the global predictor can be allocated to a critical service running on the processing core, thereby avoiding a resource bottleneck and further improving service running efficiency. In addition, enabling, disabling, or clearing the buffer area in the global predictor can further improve utilization of the resource in the global predictor.

In a possible implementation of the first aspect, a size (or referred to as dimensions) of each of the plurality of buffer areas is determined based on a service to which historical running information cached in the cache area belongs. For example, the size of the first buffer area is determined based on the first service. In the foregoing possible implementation, the size of the cache area used to cache the historical running information of the service is determined based on the specific service, so that accuracy of the configured size of the buffer area can be improved, thereby avoiding resource waste or resource insufficiency.

In a possible implementation of the first aspect, the plurality of processing cores further include: a second processing core, configured to: when the first service is switched from the first processing core to the second processing core, obtain the first historical running information from the first buffer area, and run the first service based on the first historical running information. In the foregoing possible implementation, when the first service is switched from the first processing core to the second processing core, the second processing core may still obtain the first historical running information from the first buffer area in which the first service is cached, thereby avoiding a problem that the second processing core encounters a large quantity of cold misses when the first service is switched.

In a possible implementation of the first aspect, the historical running information or the first running information includes at least one of the following: branch address pair information, jump information, instruction trace, data trace, cache hot/cold information, scheduling recommendation information, page table information, or regularity information or hard-to-predict address information of hardware prefetching. In the foregoing possible implementation, speculation accuracy and speculation efficiency of the at least one piece of information can be greatly improved, thereby improving service running efficiency.

In a possible implementation of the first aspect, the historical running information or the first running information further includes a branch block index, and the branch block index is used to index the at least one item. In this case, when a branch block corresponding to the branch block index is accessed, searching of the global predictor may be triggered. In the foregoing possible implementation, speculation accuracy and speculation efficiency of the branch block in the service can be greatly improved, thereby improving service running efficiency.

In a possible implementation of the first aspect, the first processing core includes: a buffer, configured to obtain at least a part of the first historical running information from the global predictor and cache the at least a part. In the foregoing possible implementation, a small-capacity buffer area is disposed in the first processing core, and the buffer dynamically obtains, from the first historical running information of the global predictor, the running information required for running the first service. Therefore, impact of a transmission delay of the first historical running information on running efficiency of the first service is avoided, and running efficiency of the first service is further improved.

In a possible implementation of the first aspect, the first historical running information is historical running information of another service that is the same as or belongs to a same type as the first service. In the foregoing possible implementation, when the first historical running information is the historical running information of the another service that is the same as or belongs to the same type as the first service, there is high repetition and similarity between the running information of the first service and the first historical running information. In this case, the first processing core runs the first service based on the first historical running information, thereby greatly improve running efficiency of the first service.

According to a second aspect, a service processing method is provided, applied to a service processing apparatus, where the apparatus includes a global predictor and a plurality of processing cores coupled to the global predictor; and the method includes: The global predictor caches historical running information of at least one of the plurality of processing cores; a first processing core in the plurality of processing cores obtains first historical running information in the historical running information, and runs a first service based on the first historical running information, to obtain first running information, where the first processing core is any one of the plurality of processing cores; and the global predictor caches the first running information.

In a possible implementation of the second aspect, the historical running information includes historical running information of a plurality of services, the historical running information of the plurality of services includes the first historical running information, and that the global predictor caches the historical running information of the at least one of the plurality of processing cores includes: separately caching, in a plurality of buffer areas of the global predictor, the historical running information of the plurality of services, where a first buffer area in the plurality of buffer areas is used to cache the first historical running information.

In a possible implementation of the second aspect, the method further includes: The first processing core obtains configuration information for the first service, where the configuration information indicates the first buffer area; and the first processing core configures the first buffer area for the first service based on the configuration information, where configuring the first buffer area includes enabling, disabling, or clearing the first buffer area.

In a possible implementation of the second aspect, a size of the first buffer area is determined based on the first service.

In a possible implementation of the second aspect, the plurality of processing cores further include a second processing core, and the method further includes: When the first service is switched from the first processing core to the second processing core, the second processing core obtains the first historical running information from the first buffer area, and runs the first service based on the first historical running information.

In a possible implementation of the second aspect, the historical running information or the first running information includes at least one of the following: branch address pair information, jump information, instruction trace, data trace, cache hot/cold information, scheduling recommendation information, page table information, or regularity information or hard-to-predict address information of hardware prefetching.

In a possible implementation of the second aspect, the historical running information or the first running information further includes a branch block index, and the branch block index is used to index the at least one item.

In a possible implementation of the second aspect, that the first processing core obtains the first historical running information in the historical running information includes: A buffer of the first processing core obtains at least a part of the first historical running information from the global predictor and caches the at least a part.

In a possible implementation of the second aspect, the first historical running information is historical running information of another service that is the same as or belongs to a same type as the first service.

According to a third aspect, an electronic device is provided. The electronic device includes a memory and a service processing apparatus. The service processing apparatus includes a global predictor and a plurality of processing cores. The memory is configured to store computer instructions. The service processing apparatus is configured to execute the computer instructions, so that the electronic device implements the service processing method provided in any one of the second aspect or the possible implementations of the second aspect.

According to still another aspect of this application, a computer-readable storage medium is provided. The computer-readable storage medium stores a computer program or instructions. When the computer program or the instructions are run, the service processing method according to any one of the second aspect or the possible implementations of the second aspect is implemented.

According to still another aspect of this application, a computer program product is provided, where the computer program product includes a computer program (which may also be referred to as code or instructions), and when the computer program is run, a computer is caused to perform the service processing method provided in any one of the second aspect or the possible implementations of the second aspect.

It may be understood that for beneficial effects that can be achieved by any one of the foregoing service processing method, the electronic device, the computer-readable storage medium, and the computer program product, refer to beneficial effects in the service processing apparatus provided above. Details are not described herein again.

### BRIEF DESCRIPTION OF DRAWINGS

FIG. 1A, FIG. 1B, and FIG. 1C are diagrams of structures of a multi-core system according to an embodiment of this application;
FIG. 2 is a diagram of a structure of a service processing apparatus according to an embodiment of this application;
FIG. 3 is a diagram of a structure of an LBTB according to an embodiment of this application;
FIG. 4 is a diagram of a structure of another LBTB according to an embodiment of this application;
FIG. 5 is a diagram of obtaining historical running information by a processing core according to an embodiment of this application;
FIG. 6 is a diagram of a structure of an sBTB according to an embodiment of this application;
FIG. 7 is a diagram of sharing global prediction by a plurality of processing cores according to an embodiment of this application;
FIG. 8 is a diagram of configuring a global predictor according to an embodiment of this application; and
FIG. 9 is a diagram of a structure of an electronic device according to an embodiment of this application;

### DESCRIPTION OF EMBODIMENTS

The making and use of embodiments are discussed in detail below. It should be appreciated, however, that many applicable inventive concepts provided in this application may be implemented in a plurality of specific environments. The specific embodiments discussed are merely illustrative of specific ways to implement and use this application and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. The term "at least one of the following items (pieces)" or a similar expression thereof means any combination of these items, including any combination of singular items (pieces) or plural items (pieces). For example, at least one of a, b, or c may indicate: a, b, c, "a and b", "a and c", "b and c", or "a, b, and c", where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. The term "coupling" is used for representing an electrical connection, including a direct connection through a wire or a connection end or an indirect connection through another device. Therefore, "coupling" should be considered as a generalized electronic communication connection.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, the words such as "example" or "for example" are intended to present a related concept in a specific manner.

Currently, a central processing unit (central processing unit, CPU) subsystem usually has low efficiency when performing service processing. This problem is specifically manifested as: a high cache miss rate, low branch prediction accuracy, and a low instruction per clock (instruction per clock, IPC). For example, instructions and data of a service running on the CPU subsystem are large in scale, but resources capacities such as a cache, a branch target buffer (branch target buffer, BTB), and a branch direction predictor in the CPU subsystem are limited. As a result, a large quantity of cache misses are easily caused. For another example, software in the CPU subsystem is unaware of speculative means such as front-end prefetching and back-end prefetching. Therefore, prefetching information cannot assist in other predictions, causing information waste. For another example, a quantity of threads of an application running on the CPU subsystem is far greater than a quantity of processing cores (or referred to as cores, or also referred to as processing cores) included in the CPU subsystem. This easily causes switching of a large quantity of threads (including switching within a same processing core and switching between different processing cores). When the thread is switched, data stored in resources such as a cache, a BTB, and a branch direction predictor is not data required by the current thread. As a result, a large quantity of cold misses occur in the current thread.

Based on this, an embodiment of this application provides a service processing apparatus. The service processing apparatus includes a global predictor (global predictor, GP) and a plurality of processing cores coupled to the global predictor. The global predictor may be configured to cache historical running information. Any one of the plurality of processing cores may be configured to obtain running information required in the historical running information, and run a service based on the obtained running information. The global predictor is further configured to cache running information obtained by running the service. In this way, the global predictor caches the historical running information and the running information generated when any processing core runs the service. When running the service, the plurality of processing cores obtain the running information required by each of the plurality of processing cores from the global predictor. This can reduce a cache miss rate when the plurality of processing cores process the service, improve prediction accuracy and an IPC (instruction per clock), and further improve service running efficiency.

The service processing apparatus provided in the embodiments of this application may be applied to a multi-core system, and the multi-core system may be referred to as a processor subsystem (for example, a CPU subsystem). The following describes a structure of the multi-core system.

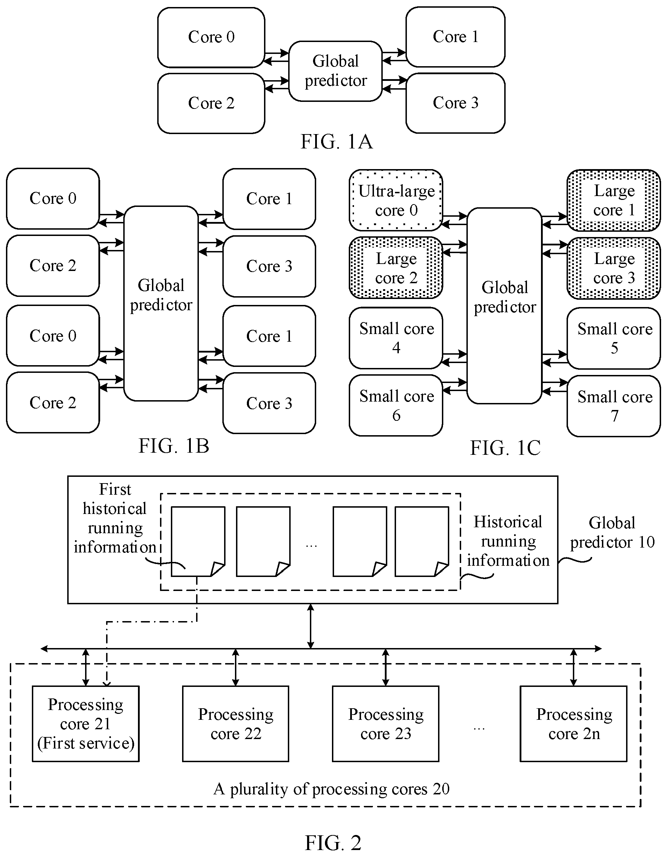

FIG. 1A, FIG. 1B, and FIG. 1C are diagrams of structures of a multi-core system according to an embodiment of this application. The multi-core system includes a global predictor and a plurality of processing cores coupled to the global predictor. The plurality of processing cores may share the global predictor through software configuration. The plurality of processing cores may be configured to deploy different services, a same service, or partially same services. The partially same services may mean that two services need to access partially same data and/or instructions in a running process. In this embodiment of this application, the plurality of processing cores may be configured to perform services such as a benchmark (benchmark) performance test, a service performance test, similar service deployment, or service suite deployment. For example, the service scenario of the multi-core system includes but is not limited to: a server cluster benchmark performance test, a server cluster bidding service performance test, server cluster similar service deployment (for example, high-performance computing (high-performance computing, HPC)), server cluster service suite deployment, a terminal field benchmark performance test, service switching, service migration, and the like.

A quantity of the plurality of processing cores included in the multi-core system may be configured based on an actual requirement. For example, the quantity of the plurality of processing cores may be 2, 4, 6, 8, or the like. In addition, the plurality of processing cores may be of a homogeneous structure (that is, including a plurality of processing cores) or of a heterogeneous structure (that is, including different processing cores). In an example, as shown in FIG. 1A, the multi-core system includes: a global predictor and four processing cores coupled to the global predictor, where the four processing cores are respectively represented as a core 0 to a core 3, and the four processing cores are of a homogeneous structure. In another example, as shown in FIG. 1B, the multi-core system includes: a global predictor and eight processing cores coupled to the global predictor, where the eight processing cores are respectively represented as a core 0 to a core 3, and the eight processing cores are of a homogeneous structure. In still another example, as shown in FIG. 1C, the multi-core system includes: a global predictor and eight processing cores coupled to the global predictor, where the eight processing cores may be of a heterogeneous structure, and the eight processing cores may include an ultra-large core 0, large cores 1 to 3, and small cores 4 to 7.

In the multi-core system, the plurality of processing cores may include a plurality of different processing cores of a same processor, or the plurality of processing cores include processing cores of a plurality of different processors, that is, the plurality of processing cores may form one or more processors. The processor includes but is not limited to: a CPU, a general-purpose processor, a graphics processing unit (graphic processing unit, GPU), an image signal processor (image signal processor, ISP), a digital signal processor (digital signal processor, DSP), a network processing unit (network processing unit, NPU), an artificial intelligence (artificial intelligence, AI) processor, and the like. Optionally, any two of the plurality of processing cores may have a same or different structure and a same or different size of hardware resources (for example, cache resources) that are respectively included. This is not specifically limited in this embodiment of this application.

Further, the multi-core system may further include a memory coupled to the plurality of processing cores. The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example, the RAM may be a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), or the like. The memory is not shown in the figure.

The multi-core system may be an electronic device, or a system on chip (system on chip, SoC) applied to an electronic device, or a chipset including a plurality of chips, or a module including a SoC or a chipset. The electronic device may be used as a terminal device, or may be used as a server. Optionally, the electronic device includes but is not limited to a mobile phone, a tablet computer, a notebook computer, a desktop computer, a palmtop computer, an ultra-mobile personal computer (ultra-mobile personal computer, umPC), a mobile internet device (mobile internet device, MID), a netbook, a video camera, a camera, a wearable device (for example, a smart watch or a smart band), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electric meter), a smart robot, a workshop device, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a flight device (for example, a smart robot, a hot air balloon, an unmanned aerial vehicle, or an airplane), or the like.

FIG. 2 is a diagram of a structure of a service processing apparatus according to an embodiment of this application. The service processing apparatus includes a global predictor 10 and a plurality of processing cores 20 coupled to the global predictor 10. The plurality of processing cores 20 share the global predictor 10. For example, the plurality of processing cores 20 are configured to share different resources of the global predictor 10 by using software. In FIG. 2, an example in which the plurality of processing cores 20 include a processing core 21 to a processing core 2n is used for description, where n is an integer greater than 1.

The global predictor 10 is configured to cache historical running information of at least one of the plurality of processing cores 20. The at least one processing core includes one or more processing cores. When the at least one processing core includes the plurality of processing cores, the at least one processing core may be a part of the plurality of processing cores 20, or may be all of the plurality of processing cores 20. The historical running information cached in the global predictor 10 may be obtained by the at least one processing core running a service. For example, each of the at least one processing core may run one or more services, and transmit running information obtained by running the service to the global predictor 10. The global predictor 10 caches the running information transmitted by the at least one processing core as the historical running information.

Any processing core (referred to as a first processing core 21 below for ease of description) in the plurality of processing cores 20 is configured to: obtain first historical running information in the historical running information, and run a first service based on the first historical running information, to obtain first running information. The first historical running information may be a part or all of the historical running information. Optionally, the first historical running information is historical running information of another service that is the same as or belongs to a same type as the first service. For example, the first historical running information may be historical running information of the first service, that is, running information obtained by running the first service before. Alternatively, the first service and the second service are two services in same high-performance computing, and the first historical running information is historical running information of the second service. The following uses an example in which the first historical running information is the historical running information of the first service for description.

The global predictor 10 is further configured to cache the first running information. For example, when obtaining the first running information, the first processing core 21 transmits the first running information to the global predictor 10, and the global predictor 10 receives and caches the first running information. After the global predictor 10 caches the first running information, when any processing core (for example, the first processing core 21 or another processing core) in the plurality of processing cores 20 obtains historical running information from the global predictor 10, the historical running information includes the first running information. In other words, the historical running information is dynamically updated, and the global predictor 10 may dynamically update the historical running information based on the running information obtained by the plurality of processing cores 20 running the service.

Optionally, the historical running information or the first running information includes at least one of the following: branch address pair information, jump information, instruction trace, data trace, cache hot/cold information, scheduling recommendation information, page table information, or regularity information or hard-to-predict address information of hardware prefetching. The branch address pair information refers to an address of an executed branch in a memory, where the address includes a source address and a destination address, and the source address and the destination address form an address pair. The jump information may include a jump direction and a jump destination, the jump direction indicates a jump direction (that is, jump or non-jump) of a jump instruction, and the jump destination refers to a destination address after the jump. The data trace indicates a track of accessed data. The instruction trace indicates a track of an accessed instruction. The cache hot/cold information indicates a hot/cold degree of data and/or instructions in a cache (for example, a level-1 cache, a level-2 cache, and a level-3 cache). The scheduling recommendation information indicates information recommended in a scheduling process, for example, a scheduling policy recommended based on quality of service (quality of service, QoS). The page table information indicates a correspondence between a virtual address and a physical address corresponding to accessed data and/or instructions. The regularity information of hardware prefetching indicates a regularity of hardware prefetching data and/or instructions. The prefetching may include front-end prefetching and/or back-end prefetching. The hard-to-predict address information indicates hard-to-predict address information of a hardware prefetch (hardware prefetch, HWP). The memory corresponding to the address may be located on a same chip or different chips from the one or more processing cores, and may be a volatile or non-volatile memory. This is not limited in this embodiment.

It may be understood that, in addition to the foregoing information, the historical running information or the first running information may further include other information (for example, value prediction information, where the value prediction information may be a value obtained through prediction when memory access is not completed) required in a service running process. This is not specifically limited in this embodiment of this application.

Optionally, the historical running information or the first running information further includes a branch block index, and the branch block index is used to index the at least one piece of information. In this case, when the branch block corresponding to the branch block index is accessed, searching of the global predictor 10 may be triggered. The branch block index may also be referred to as a branch block program counter (program counter, PC) index (block PC index). For ease of understanding, the following uses the historical running information as an example to describe the branch block index included in the historical running information and the first running information and at least one item corresponding to the branch block index.

In an example, it is assumed that the historical running information includes historical running information of a plurality of services. Historical running information of each service may include at least one branch block index and historical running sub-information corresponding to each branch block index. Each piece of historical running sub-information may include at least one of the following: branch address pair information, jump information, instruction trace, data trace, cache hot/cold information, scheduling recommendation information, page table information, or regularity information or hard-to-predict address information of hardware prefetching.

Each of the plurality of services may include at least one branch block, and each branch block (or referred to as a subprogram or a program segment) in the at least one branch block may correspond to one branch block index. After the branch block is run, one piece of historical running sub-information may be obtained correspondingly. A branch block index of one branch block may be used to index the historical running sub-information obtained after the branch block is run. Optionally, the branch block index may be an instruction fetch address, and the instruction fetch address may be a source address corresponding to the branch block.

For example, the historical running information may be shown in the following Table 1. In Table 1, it is assumed that the plurality of services include M services, the M services are represented as a service 1 to a service M, at least one branch block index of the service 1 is represented as an ID 1-1, an ID 1-2, ..., at least one branch block index of the service 2 is represented as an ID 2-1, an ID 2-2, ..., and at least one branch block index of the service M is represented as an ID M-1, an ID M-2, ....

**Table 1**

| The plurality of services | Historical running information | |
|---|---|---|
| | Branch block index | Historical running sub-information |
| Service 1 | ID 1-1 | Branch address pair information, jump information, instruction trace, ... |
| | ID 1-2 | Branch address pair information, jump information, instruction trace, ... |
| | ... | ... |
| Service 2 | ID 2-1 | Branch address pair information, jump information, instruction trace, ... |
| | ID 2-1 | Branch address pair information, jump information, instruction trace, ... |
| | ... | ... |
| ... | | |
| Service M | ID M-1 | Branch address pair information, jump information, instruction trace, ... |
| | ID M-2 | Branch address pair information, jump information, instruction trace, ... |
| | ... | ... |

It may be understood that, in Table 1, an example in which information types included in historical running sub-information corresponding to different branch block indexes are the same is used for description. In actual application, information types included in the historical running sub-information corresponding to different branch block indexes may alternatively be different. This is not specifically limited in this embodiment of this application.

In addition, the global predictor 10 may further include other information of each of the plurality of services. For example, the other information may include a service identifier, and/or a service context (context), and the like. This is not specifically limited in this embodiment of this application.

Further, the global predictor 10 includes a plurality of buffer areas. The plurality of buffer areas are used to separately cache historical running information of the plurality of services. Each of the plurality of buffer areas may be used to: cache historical running information obtained by running one processing core, that is, historical running information obtained by running different processing cores may be correspondingly cached in different buffer areas; or cache historical running information of one service, that is, historical running information of different services may be correspondingly cached in different buffer areas.

Optionally, the plurality of buffer areas include a first buffer area, the first buffer area is configured to cache historical running information of a first service, and the historical running information of the first service may include first historical running information. In a possible example, for any processing core (referred to as a second processing core 22 in this specification) in the plurality of processing cores 20 except the first processing core 21, when the first service is switched from a first thread of the first processing core 21 to a second thread of the second processing core 22, the second processing core 22 may be configured to obtain the first historical running information from the first buffer area, and run the first service based on the first historical running information. In this example, when the first service is switched from the first processing core 21 to the second processing core 22, the second processing core 22 may still obtain the first historical running information from the first buffer area in which the first service is cached, thereby avoiding a problem that the second processing core 22 encounters a large quantity of cold misses when the first service is switched.

Optionally, a size (or referred to as dimensions) of each of the plurality of buffer areas may be determined based on a service to which the historical running information cached in the cache area belongs. For example, the size of the first buffer area is determined based on the first service. In other words, the size of the buffer area used to cache the historical running information of a service may be dynamically determined based on the size of the service. For example, in actual application, the size of the corresponding buffer area may be dynamically determined for each service by software (for example, an operating system) running on the plurality of processing cores 20. This is not specifically limited in this embodiment of this application.

In a possible embodiment, the global predictor 10 includes multi-channel buffers, and each of the plurality of cache areas may include at least one channel of buffer in the multi-channel buffers. Optionally, each channel of buffer in the multi-channel buffers may be configured to cache historical running information of one service, historical running information of different services is cached in different buffers, and historical running information of a same service may occupy one or more channels of buffer. In addition, the multi-channel buffers are independent of each other, each channel of buffer may be accessed independently, and access corresponding to different channels of buffer does not affect each other. For example, the multi-channel buffers include a first-channel buffer, and the first-channel buffer is configured to cache the historical running information of the first service.

When historical running information of a specific service includes at least one of the following information: the branch address pair information, the jump information, and the instruction trace, for any one of the at least one item, each channel of buffer in the global predictor 10 may cache the item by using the following structure. For ease of description, the following uses an example in which the first processing core 21 runs the first service, the first-channel buffer is configured to cache the historical running information of the first service, and the historical running information of the first service includes the branch address pair information for description. The first-channel buffer may also be referred to as a link branch target buffer (link branch target buffer, LBTB).

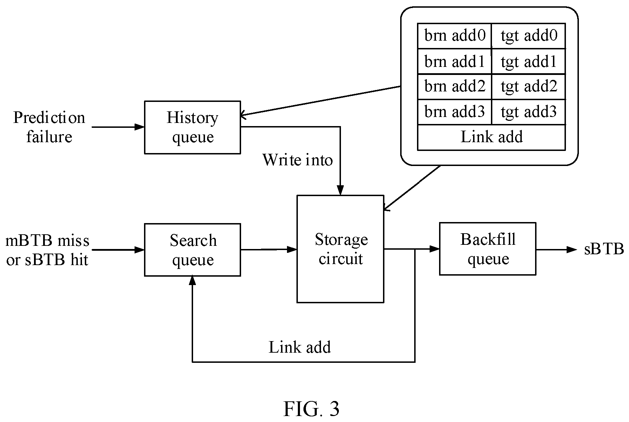

In an example, as shown in FIG. 3, the LBTB may include a history queue (history queue), a storage circuit, a search queue (search queue), and a backfill queue (backfill queue). The history queue, the search queue, and the backfill queue are all coupled to the storage circuit.

The history queue is used to: when a target address fails in prediction by using a branch in a running process of the first service (a prediction failure is represented in the figure, and the prediction failure may mean that the target address corresponding to the branch is not found in a cache of the first processing core 21 (for example, a first buffer and a second buffer described below)), obtain a correct branch address pair (that is, including a source address and a target address) from a pipeline corresponding to the first service, and output the branch address pair to the storage circuit. Optionally, to reduce a quantity of times of updating the LBTB, and reduce power consumption overheads and access conflicts, the history queue may be used to: when a preset quantity of branch address pairs (for example, four address pairs) are obtained accumulatively, output the preset quantity of branch address pairs to the storage circuit as a group in a specific storage format. In FIG. 3, for example, the preset quantity of branch address pairs include brn add0-tgt add0, brn add1-tgt add1, brn add2-tgt add2, and brn add3-tgt add3, and the storage format further includes a link address link add. The link add indicates a next group of branch address pairs.

The storage circuit is configured to receive and cache the branch address pair output by the history queue. When a group of branch address pairs is cached in the foregoing storage format, the storage circuit may index a source address of a first branch address pair, and write the group of branch addresses into a corresponding memory. Optionally, the storage circuit may include multi-way RAMs that are connected, so that search efficiency can be improved when the storage circuit is searched for.

The search queue is used to: obtain an instruction fetch address of the branch block, and output the instruction fetch address to the storage circuit. The search queue may receive and filter repeated address information. In addition, the search queue may be a multi-in-one-out queue, so that an effect of balancing a bandwidth difference between input and output can be implemented. Optionally, the search queue may obtain the instruction fetch address when the first processing core 21 meets a specific condition. For example, the condition may include but is not limited to: querying in a main branch target buffer (main branch target buffer, mBTB) is performed and a miss occurs, or querying in a stream branch target buffer (stream branch target buffer, sBTB) is performed and a hit occurs. For detailed descriptions of the mBTB and the sBTB, refer to the following descriptions. Details are not described herein in this embodiment of this application.

The storage circuit is further configured to: when receiving an instruction fetch address of a branch block of the first processing core 21, obtain a corresponding branch address pair based on the instruction fetch address, and output the branch address pair to the backfill queue. Optionally, when a group of branch address pairs is cached in the foregoing storage format, the storage circuit may disassemble the group of obtained branch addresses, and output a preset quantity of branch address pairs obtained through disassembling to the backfill queue, a link add in the group of branch address pairs is output to the search queue, so that the search queue performs a next search based on the link add.

The backfill queue is used to backfill the branch address pair output by the storage circuit into the first processing core 21. Optionally, the backfill queue may backfill the preset quantity of branch address pairs output by the storage circuit into a buffer of the first processing core 21, for example, backfill the preset quantity of branch address pairs into an sBTB of the first processing core 21.

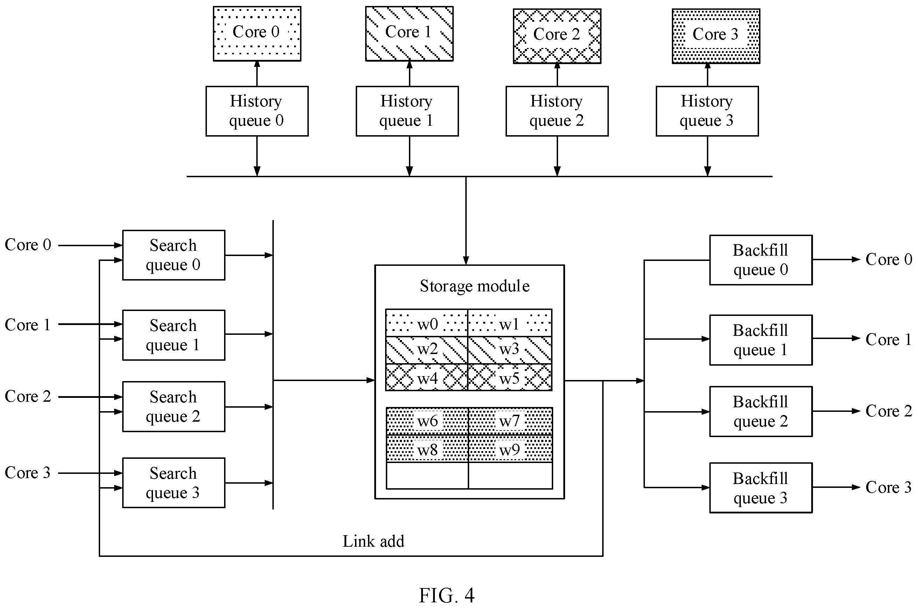

In another example, with reference to FIG. 3, as shown in FIG. 4, for each processing core in the plurality of processing cores 20, the global predictor 10 may include a history queue, a storage circuit, a search queue, and a backfill queue that correspond to each processing core. Different storage circuits in the global predictor 10 may be integrated together as a storage module. Alternatively, the global predictor includes a storage module, the storage module includes a storage circuit corresponding to each processing core, and the storage circuit includes multi-channel caches. In FIG. 4, the plurality of processing cores 20 include four processing cores, which are respectively represented as a core 0 to a core 3. The core 0 corresponds to a history queue 0, a search queue 0, a backfill queue 0, and two-channel caches w0 and w1. The core 1 corresponds to a history queue 1, a search queue 1, a backfill queue 1, and two-channel caches w2 and w3. The core 2 corresponds to a history queue 2, a search queue 2, a backfill queue 2, and two-channel caches w4 and w5. The core 3 corresponds to a history queue 3, a search queue 3, a backfill queue 3, and four-channel caches w6 to w9.

Further, the following uses an example in which the first processing core 21 obtains the first historical running information from the global predictor 10 to describe a related process in which any one of the plurality of processing cores 20 obtains historical running information from the global predictor 10.

In a possible embodiment, the first processing core 21 includes a first buffer, and the first buffer is configured to obtain at least a part of the first historical running information from the global predictor 10 and cache the at least a part. The first processing core 21 may further include a second buffer, where the second buffer is different from the first buffer. The second buffer may be a buffer that is disposed in the first processing core 21 and that is configured to cache prefetch information, and the second buffer is not configured to cache historical running information obtained from the global predictor 10. In this embodiment of this application, the first buffer may also be referred to as a candidate buffer (for example, sBTB), and the second buffer may be referred to as a primary buffer (for example, mBTB).

Optionally, the first buffer may be specifically configured to obtain at least a part of the first historical running information from the global predictor 10 when a specific condition is met, and cache the at least a part. For example, the condition may include that: querying in the second buffer is performed and a miss occurs (that is, the second buffer does not have required information), or querying in the first buffer is performed and a hit occurs (that is, the first buffer has required information). This is not specifically limited in this embodiment of this application.

When the first historical running information includes at least one of the following information: the branch address pair information, the jump information, and the instruction trace, there may be at least one first buffer of the first processing core 21, that is, the first processing core 21 includes at least one first buffer, and each of the at least one first buffer may be configured to cache one of the plurality of pieces of historical running information. For ease of description, the following uses an example in which the first historical running information includes the branch address pair information, and the first processing core 21 includes a primary branch target buffer mBTB (corresponding to the second buffer) and a streaming branch target buffer sBTB (corresponding to the first buffer) for description.

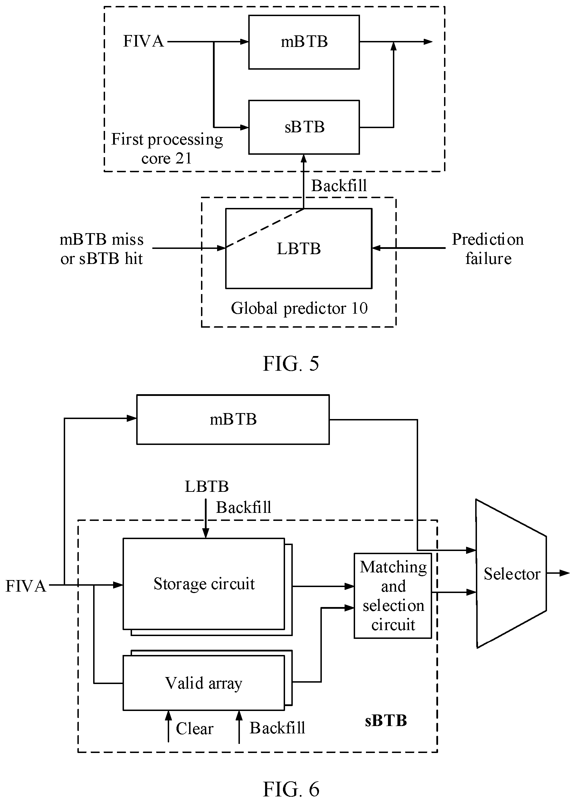

For example, as shown in FIG. 5, the first processing core 21 includes an mBTB and an sBTB. The mBTB caches a first branch address pair set corresponding to the first service prefetched by the first processing core 21, and the sBTB caches a second branch address pair set obtained from the LBTB of the global predictor 10. In a process in which the first processing core 21 runs the first service, when the first processing core 21 obtains an instruction fetch address FIVA by fetching an instruction, the first processing core 21 may first query whether a target branch address corresponding to the FIVA exists in the first branch address pair set cached in the mBTB. If the target branch address exists (that is, a hit occurs), the first processing core 21 continues to perform execution based on the target branch address. If the target branch address does not exist (that is, a miss occurs), the first processing core 21 queries whether the target branch address corresponding to the FIVA exists in the second branch address pair set cached in the sBTB, and if the target branch address exists (that is, a hit occurs), the first processing core 21 continues to perform execution based on the found target branch address. In addition, when querying in the mBTB is performed and a miss occurs, or when querying in the sBTB is performed and a hit occurs, it indicates that the historical running information is accurate and available as prefetch information. The sBTB may obtain more branch address pairs corresponding to the first service from the LBTB of the global predictor 10. For example, the sBTB sends a next instruction fetch address to the global predictor 10, so that the more branch address pairs are obtained by using the next instruction fetch address, and are used when the first processing core 21 runs the first service. Optionally, when the first service ends running or when another service needs to use the sBTB, the first processing core 21 may further clear (or referred to as flush) the sBTB. For example, the first processing core 21 may clear the sBTB by using a valid bit.

It may be understood that, the condition for the sBTB to obtain the branch address pair from the LBTB of the global predictor 10 may further include another condition, for example, the branch address pair is obtained when a specific duration is reached, or the branch address pair is obtained when all pipeline jumps of the first processing core 21 occur. This is not specifically limited in this embodiment of this application.

In addition, FIG. 6 is a possible diagram of a structure of the sBTB. As shown in FIG. 6, the sBTB may include a storage circuit and a valid bit array. The storage circuit may be configured to cache historical running information from the global predictor 10, and the valid bit array may indicate validity of the cached information in the storage circuit. The storage circuit may include multi-way RAMs that are connected, so that search efficiency can be improved when the storage circuit is searched for. Optionally, the sBTB may further include a matching and selection circuit, and the matching and selection circuit may be configured to perform output when the service to which the FIVA belongs matches the service currently cached in the sBTB and the target branch address hit by the sBTB is valid. In addition, an output end of the mBTB and an output end of the sBTB may be further coupled by using a selector, and are configured to select an output result of the mBTB when the hit occurs in the mBTB, and select an output result of the sBTB when the hit occurs in the sBTB.

Optionally, when the first processing core 21 queries the first buffer and a hit occurs, the first processing core 21 may reload the hit running information to a module or component that needs to be used by the pipeline as speculative information. For example, the branch address pair is loaded back to a branch pipeline, hot/cold information and criticality information of an instruction cache and a data cache are loaded back to an instruction prefetch and replacement component, historical running information of a page table is loaded back to a page table prefetch component, and regularity information and hard-to-predict address information of hardware prefetching are loaded back to a hardware prefetch component.

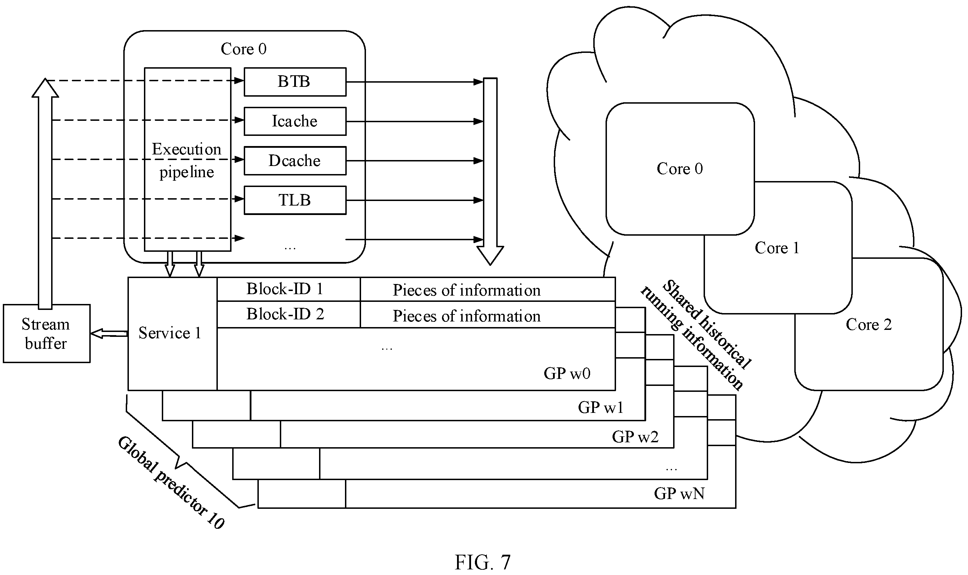

Further, in a possible example, as shown in FIG. 7, when the historical running information cached in the global predictor includes a plurality of pieces of information such as branch address pair information, jump information, and instruction trace information, a second buffer used to cache the plurality of pieces of information in any one core (for example, a core 0) in the plurality of processing cores 21 (for example, the core 0, a core 1, and a core 2) may include a branch target buffer (branch target buffer, BTB), an instruction cache (instruction cache, Icache), a data cache (data cache, Dcache), a page table cache (translation lookaside buffer, TLB), and the like. The processing core may further include another component, for example, an execution pipeline (execution pipeline). In FIG. 7, an example in which the processing core caches, by using a first buffer, the plurality of pieces of information obtained from the global predictor 10, and the first buffer is a stream buffer (stream buffer) is used for description.

Correspondingly, in an example, as shown in FIG. 7, the global predictor 10 includes multi-channel buffers (for example, N-channel buffers and represented as GP w0 to GP wN), where each buffer may be configured to cache historical running information of one service, and historical running information of any service may include a plurality of branch block indexes and the foregoing plurality of pieces of information corresponding to each branch block index. In FIG. 7, an example in which branch block indexes in historical running information of a service 1 include a block-ID 1 and a block-ID 2 is used for description. When a service is switched between different processing cores, the processing core in which the service is located after the service is switched may share the historical running information of the service in the global predictor 10.

After related structures of the global predictor 10 and the plurality of processing cores 20 are described, the following describes in detail a process of allocating a resource in the global predictor 10 to any one of the plurality of processing cores 20.

Optionally, the resource in the global predictor 10 that is used by any one of the plurality of processing cores 20 may be obtained through configuration. When any one of the plurality of processing cores 20 needs to use the global predictor 10 to cache historical running information of a specific service, the global predictor 10 may be configured for the processing core. For example, a corresponding buffer area is configured for the processing core in the global predictor 10. In addition, a service that can use the global predictor 10 may be configured for the plurality of processing cores 20, that is, some key services are configured for any one of the plurality of processing cores 20, and only historical running information of the configured key services can be cached in the global predictor. The following describes a process of configuring the global predictor by using the first processing core 21 as an example.

In a possible embodiment, the first processing core 21 is further configured to: obtain configuration information for the first service, where the configuration information indicates the first buffer area; and configure the first buffer area for the first service based on the configuration information. Optionally, configuring the first buffer area may include enabling, disabling, or clearing the first buffer area. The configuration information may be sent by software running on the plurality of processing cores 20 to the first processing core 21, or may be preconfigured in the first processing core 21. This is not specifically limited in this embodiment of this application. The configuration information may indicate a size of the first buffer area, and/or indicate address space corresponding to the first buffer area. Further, the configuration information may further indicate the first service. For example, the configuration information may include a service identifier of the first service.

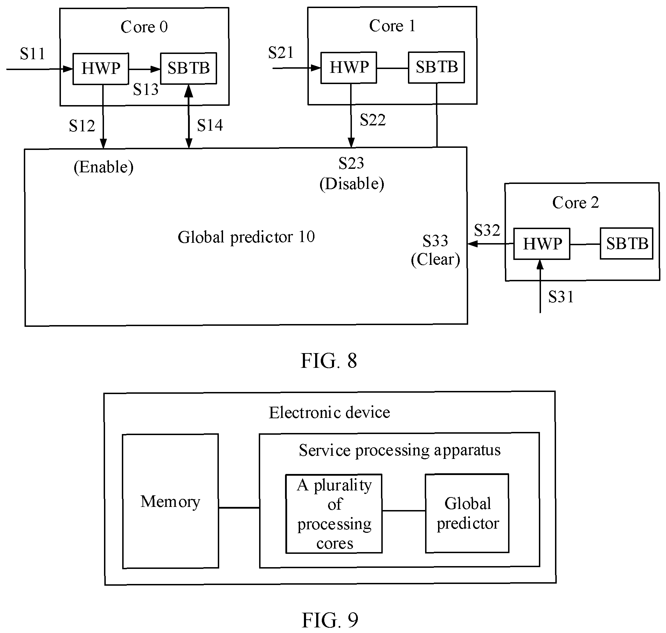

For ease of understanding, as shown in FIG. 8, the following describes, by using an example, a process of enabling, disabling, and clearing the global predictor 10 via the configuration information when the first processing core 21 is respectively a core 0, a core 1, or a core 2. FIG. 8 is described by using an example in which the core 0, the core 1, and the core 2 each include an HWP and an SBTB.

In an example, it is assumed that the first processing core 21 is the core 0, and enabling the global predictor 10 via the configuration information includes: S11. When a service a needs to be run on the core 0, the software running on the plurality of processing cores 20 may send, to the core 0, first configuration information for the service a. S12. When the core 0 receives the first configuration information, the HWP of the core 0 enables the global predictor 10 based on the first configuration information, for example, sends service information and enabling information to the global predictor 10, to enable the global predictor 10 to cache historical running information of the service a. S13. The core 0 may further enable the sBTB when the currently cached information in the sBTB matches the service a. S14. The global predictor 10 starts to work.

In another example, it is assumed that the first processing core 21 is the core 1, and disabling the global predictor 10 via the configuration information includes: S21. When a service b running on the core 1 needs to be disabled from using the global predictor 10, the software running on the plurality of processing cores 20 may send, to the core 1, second configuration information for the service b. S22. When the second configuration information is received, the HWP of the core 1 disables the global predictor 10 based on the second configuration information, for example, sends service information and disabling information to the global predictor 10. S23. The global predictor 10 stops providing a service for the service b on the core 1, that is, stops providing historical running information of the service to the core 1.

In another example, it is assumed that the first processing core 21 is the core 2, and clearing the global predictor 10 via the configuration information includes: S31. When a service c running on the core 2 needs to be cleared from using the global predictor 10, the software running on the plurality of processing cores 20 may send, to the core 2, third configuration information for the service c. S32. When the third configuration information is received, the HWP of the core 2 clears the global predictor 10 based on the third configuration information, for example, sends thread information and clearing information to the global predictor 10. S33. The global predictor 10 clears information corresponding to this thread, that is, clears historical running information of the service c. Optionally, the global predictor 10 may perform clearing in a row-by-row clearing manner.

In this embodiment of this application, the global predictor 10 caches the historical running information and the running information generated when any processing core runs a service, to update the cached running information for subsequent use. When running a service, the plurality of processing cores 20 obtain respective required running information from the global predictor 10. In this way, compared with a case in which a larger-capacity cache is expanded for the plurality of processing cores, a cache miss rate of the plurality of processing cores 20 during service processing can be reduced, and a prediction accuracy and an IPC can be improved, thereby improving service running efficiency. In a service switching scenario, because the global predictor 10 may be shared by the plurality of processing cores 20, when a service is switched from one processing core to another processing core, the another processing core may still obtain historical running information of the service from the global predictor 10 to run the service. This avoids a problem that a large quantity of cold misses occur on the another processing core. In addition, a resource in the global predictor 10 used by any one of the plurality of processing cores 20 is obtained through software configuration, and a service that can use the global predictor 10 may be further configured for the plurality of processing cores 20. In this way, information overflow in the global predictor 10 can be avoided to prevent security information leakage, a key service can be identified from a software perspective, and the resource in the global predictor 10 is configured for the key service running on the processing core, thereby avoiding a resource bottleneck and further improving service running efficiency.

Based on this, an embodiment of this application further provides a service processing method. The method may be applied to a service processing apparatus including a global predictor and a plurality of processing cores coupled to the global predictor. For descriptions of the service processing apparatus, refer to the foregoing descriptions. The method includes: The global predictor caches historical running information of at least one of the plurality of processing cores; a first processing core in the plurality of processing cores obtains first historical running information in the historical running information, and runs a first service based on the first historical running information, to obtain first running information; and the global predictor caches the first running information.

Optionally, the historical running information includes historical running information of a plurality of services, and the historical running information of the plurality of services includes the first historical running information.

In a possible embodiment, the global predictor includes a plurality of buffer areas, the historical running information of the plurality of services is separately cached in the plurality of buffer areas, and first historical running information is cached in a first buffer area in the plurality of buffer areas. Correspondingly, the method may further include: The first processing core obtains configuration information for the first service, where the configuration information indicates the first buffer area; and the first processing core configures the first buffer area for the first service based on the configuration information. Configuring the first buffer area includes enabling, disabling, or clearing the first buffer area.

It may be understood that all content in the foregoing apparatus embodiments may be referenced to the corresponding embodiments of the service processing method. Details are not described herein again in this embodiment of this application.

In this embodiment of this application, the global predictor caches the historical running information and the running information generated when any processing core runs the service, to update the cached running information for subsequent use. When running the service, any one of the plurality of processing cores may obtain required running information from the global predictor. In this way, compared with a case in which a larger-capacity cache is expanded for the plurality of processing cores, in this solution, a cache miss rate of the plurality of processing cores during service processing can be reduced, and a prediction accuracy rate and an IPC can be improved, thereby improving service running efficiency.

According to another aspect of this application, an electronic device is further provided. As shown in FIG. 9, the electronic device includes a memory and a service processing apparatus. The service processing apparatus includes a global predictor and a plurality of processing cores. The memory is configured to store computer instructions. The service processing apparatus is configured to execute the computer instructions, so that the electronic device implements any service processing method provided above. For specific descriptions of the memory, refer to the foregoing embodiments.

It may be understood that all related content of the steps in the foregoing method embodiments may be cited in the embodiments of the service processing method and the embodiments of the electronic device. Details are not described herein again in this embodiment of this application.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed.

The units described as separate parts may or may not be physically separate, and parts displayed as units may be one or more physical units, may be located in one place, or may be distributed across different places. Some or all of the units may be selected based on actual requirements to achieve the objectives of the solutions in embodiments.

If the integrated unit is implemented in a form of a software functional unit and is sold or used as an independent product, the integrated unit may be stored in a readable storage medium. The readable storage medium may include any medium that can store program code, for example, a USB flash drive, a removable hard disk, a read-only memory, a random access memory, a magnetic disk, or an optical disc. Based on such an understanding, the technical solutions in embodiments of this application essentially, or the part contributing to the conventional technology, or all or some of the technical solutions may be embodied in a form of a software product.

In another embodiment of this application, a readable storage medium is further provided. The readable storage medium stores computer-executable instructions. When a device (which may be a single-chip microcomputer, a chip, or the like) or a processor performs the steps in the foregoing method embodiment.

In another embodiment of this application, a computer program product is further provided. The computer program product includes computer instructions, and the computer instructions are stored in a readable storage medium. At least one processor of a device may read the computer instructions from the readable storage medium, and the at least one processor executes the computer instructions to enable the device to perform the steps in the foregoing method embodiment.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A service processing apparatus, comprising: a global predictor and a plurality of processing cores coupled to the global predictor, wherein
the global predictor is configured to cache historical running information of at least one of the plurality of processing cores;
a first processing core in the plurality of processing cores is configured to obtain first historical running information in the historical running information, and run a first service based on the first historical running information, to obtain first running information, wherein the first processing core is any one of the plurality of processing cores; and
the global predictor is further configured to cache the first running information.

2. The apparatus according to claim 1, wherein the historical running information comprises historical running information of a plurality of services, and the historical running information of the plurality of services comprises the first historical running information; and
the global predictor comprises: a plurality of buffer areas, used to separately cache the historical running information of the plurality of services, wherein a first buffer area in the plurality of buffer areas is used to cache the first historical running information.

3. The apparatus according to claim 2, wherein the first processing core is further configured to:
obtain configuration information for the first service, wherein the configuration information indicates the first buffer area; and
configure the first buffer area for the first service based on the configuration information, wherein configuring the first buffer area comprises enabling, disabling, or clearing the first buffer area.

4. The apparatus according to claim 3, wherein a size of the first buffer area is determined based on the first service.

5. The apparatus according to any one of claims 2 to 4, wherein the plurality of processing cores further comprise:
a second processing core, configured to: when the first service is switched from the first processing core to the second processing core, obtain the first historical running information from the first buffer area, and run the first service based on the first historical running information.

6. The apparatus according to any one of claims 1 to 5, wherein the historical running information or the first running information comprises at least one of the following: branch address pair information, jump information, instruction trace, data trace, cache hot/cold information, scheduling recommendation information, page table information, or regularity information or hard-to-predict address information of hardware prefetching.

7. The apparatus according to claim 6, wherein the historical running information or the first running information further comprises a branch block index, and the branch block index is used to index the at least one item.

8. The apparatus according to any one of claims 1 to 7, wherein the first processing core comprises:
a buffer, configured to obtain at least a part of the first historical running information from the global predictor and cache the at least a part.

9. The apparatus according to any one of claims 1 to 8, wherein the first historical running information is historical running information of another service that is the same as or belongs to a same type as the first service.

10. A service processing method, applied to a service processing apparatus, wherein the apparatus comprises a global predictor and a plurality of processing cores coupled to the global predictor, and the method comprises:
caching, by the global predictor, historical running information of at least one of the plurality of processing cores;
obtaining, by a first processing core in the plurality of processing cores, first historical running information in the historical running information, and running a first service based on the first historical running information, to obtain first running information, wherein the first processing core is any one of the plurality of processing cores; and
caching, by the global predictor, the first running information.

11. The method according to claim 10, wherein the historical running information comprises historical running information of a plurality of services, the historical running information of the plurality of services comprises the first historical running information, and caching, by the global predictor, the historical running information of the at least one of the plurality of processing cores comprises:
separately caching, in a plurality of buffer areas of the global predictor, the historical running information of the plurality of services, wherein a first buffer area in the plurality of buffer areas is used to cache the first historical running information.

12. The method according to claim 11, wherein the method further comprises:
obtaining, by the first processing core, configuration information for the first service, wherein the configuration information indicates the first buffer area; and
configuring, by the first processing core, the first buffer area for the first service based on the configuration information, wherein configuring the first buffer area comprises enabling, disabling, or clearing the first buffer area.

13. The method according to claim 12, wherein a size of the first buffer area is determined based on the first service.

14. The method according to any one of claims 11 to 13, wherein the plurality of processing cores further comprise a second processing core, and the method further comprises:
when the first service is switched from the first processing core to the second processing core, obtaining, by the second processing core, the first historical running information from the first buffer area, and running the first service based on the first historical running information.

15. The method according to any one of claims 10 to 14, wherein the historical running information or the first running information comprises at least one of the following: branch address pair information, jump information, instruction trace, data trace, cache hot/cold information, scheduling recommendation information, page table information, or regularity information or hard-to-predict address information of hardware prefetching.

16. The method according to claim 15, wherein the historical running information or the first running information further comprises a branch block index, and the branch block index is used to index the at least one item.

17. The method according to any one of claims 10 to 16, wherein obtaining, by the first processing core, the first historical running information in the historical running information comprises:
obtaining, by a buffer of the first processing core, at least a part of the first historical running information from the global predictor and caching the at least a part.

18. The method according to any one of claims 10 to 17, wherein the first historical running information is historical running information of another service that is the same as or belongs to a same type as the first service.

19. An electronic device, wherein the electronic device comprises a memory and a service processing apparatus, the service processing apparatus comprises a global predictor and a plurality of processing cores, the memory is configured to store computer instructions, and the service processing apparatus is configured to execute the computer instructions, so that the electronic device implements the service processing method according to any one of claims 10 to 18.

20. A readable storage medium, wherein the readable storage medium stores computer instructions, and when the computer instructions are run on a device, the device is enabled to perform the service processing method according to any one of claims 10 to 18.
